# DEMANDE DE BREVET EUROPEEN

(11) **EP 1 582 568 A1**
(43) Date de publication de la demande: **05.10.2005**
(21) Numéro de dépôt: 05356060.3
(22) Date de dépôt: 04.04.2005
(51) Int. Cl.: C09D 9/00

(54) **Agent activateur pour compositon décapante, composition décapante et utlisations**

(30) Priorité: 02.04.2004 FR 0403499
(71) Demandeur: l'Industrielle de Chimie Elaborée Française (LICEF S.A.), 38280 Villette d'Anthon (FR)
(72) Inventeur: Galea, Christian, 38460 Siccieu St Julien et Carisieu (FR)
(74) Mandataire: Guerre, Dominique

(57) **Abrégé**

L'agent activateur pour composition décapante comprend au moins de l'acide citrique en solution. Il est utilisé dans des compositions pour le décapage dans le domaine du bâtiment et des carènes de bateaux.

## Description

La présente invention concerne le décapage chimique d'un support, par élimination d'un ou plusieurs revêtements de diverses natures et épaisseurs. Les domaines d'applications visés par l'invention sont très variés, et bien que, dans la présente description, l'invention soit particulièrement illustrée dans le secteur du bâtiment et du yachting, l'intérêt de l'invention ne se trouve pas limité à ces domaines, ses utilisations pouvant s'étendre à tous types d'industrie, mais aussi au grand public par exemple pour le décapage de meubles et objets en bois.

Dans le domaine du bâtiment et notamment en façades, les revêtements couramment rencontrés sont de nature organique et sont des peintures d'imperméabilité de plus ou moins grande épaisseur, des revêtements plastiques épais (RPE), des revêtements décoratifs du type marbres talochés ou encore des films minces acryliques ou pliolite®.

Les décapants le plus souvent employés pour mettre à nu les supports en vue d'une restauration ou d'un nouveau traitement sont formulés à partir de solvants chlorés, efficaces, mais dangereux à l'usage, pour les utilisateurs et l'environnement. En plus des inconvénients résultant directement des solvants chlorés, ces compositions très volatiles contiennent un certain nombre de limitateurs d'évaporation tels que les paraffines, qui sont difficiles à évacuer, même par un lavage soigneux que ce soit à l'eau chaude ou à l'eau froide et qui peuvent engendrer des désordres importants sur les revêtements neufs en recouvrement, et en particulier sur les imperméabilités de façade acryliques ou styrène-acryliques.

On est donc toujours à la recherche d'une composition décapante, exempte de solvants chlorés, et au moins aussi performante que les compositions chlorées, de telle sorte que ces dernières restent encore utilisées en volumes importants.

La Demanderesse a notamment mis au point une composition décapante répondant à ces critères et qui s'est révélée efficace sur tous les types de supports rencontrés dans le domaine du bâtiment, notamment béton ou brique, mais aussi sur des supports polymère de type polyesters tels que ceux rencontrés dans le domaine du yachting, ainsi que sur d'autres supports comme le bois ou les métaux, sans risque d'endommagement du support traité et indépendamment de la nature du ou des revêtements à éliminer, ce qui lui confère un caractère quasi universel. Cette composition comprend à titre d'ingrédient actif, au moins de l'acétate de benzyle et un solvant oxygéné, par exemple un solvant choisi parmi l'acétate de méthoxypropyle, le diacétone-alcool, la méthyl-éthyl-cétone, l'isophorone et le mélange de ceux-ci. Elle peut en outre comprendre un agent activateur choisi par exemple parmi la diéthanolamine, la diéthylène-triamine, la diméthyléthanolamine, les amines quaternaires et leurs mélanges.

La Demanderesse vient de découvrir de manière surprenante que l'acide citrique constitue un agent activateur très efficace vis-à-vis des ingrédients actifs de décapage d'une telle composition décapante. En poursuivant ses travaux, la Demanderesse a constaté que le pouvoir activateur de cet agent s'exerce sur la majorité des ingrédients actifs employés en décapage, ce qui lui confère un caractère quasi-universel.

Cette propriété a un intérêt particulier dans des compositions décapantes intégrant à titre d'ingrédient(s) actif(s) des solvants toxiques, qui peuvent alors être présents dans des proportions plus faibles.

Par agent activateur selon l'invention, on entend un système qui, utilisé en faible proportion, augmente l'efficacité du ou des ingrédients actifs d'une composition de décapage.

La Demanderesse a en effet observé qu'une composition décapante comprenant un activateur selon l'invention provoque, après application, un cloquage rapide de la couche ou des couches de revêtement à retirer. Ce phénomène visible atteste de l'efficacité de la composition activée selon l'invention. Lorsque le cloquage n'a pas lieu, en fonction des ingrédients actifs de décapage employés, on observe une forte accélération de la diffusion de la composition de décapage au travers de la couche à retirer.

Un autre intérêt de l'agent activateur est son innocuité puisque l'acide citrique est un additif alimentaire.

Un agent activateur de l'invention préféré est décrit plus en détails ci-après. Il répond avantageusement à au moins l'une quelconque des caractéristiques exposées ci-après, éventuellement combinées :
- l'agent activateur comprend de 1 à 42%, de préférence de 1 à 25%, en poids d'acide citrique par rapport au poids de l'agent ; dans certains, une proportion de 8 à 42% peut être retenue ;
- l'acide citrique est utilisé en solution ; à cet effet, il est de préférence en solution dans un liquide choisi parmi l'eau, les alcools, le chloroforme et les éthers ; l'eau, le méthanol et l'éther diéthylique sont des liquides préférés ;
- il comprend du diacétone-alcool (DAA), en une proportion avantageuse comprise entre 2 et 55%, de préférence entre 12 et 36%, en poids par rapport au poids de l'agent ; le diacétone-alcool agit sur le pouvoir activateur de l'acide citrique et l'accroît de manière significative ; dans certains, une proportion de 2 à 30% peut être retenue ;
- il comprend de la soude, en une proportion avantageuse comprise entre 0,1 et 10%, en poids par rapport au poids de l'agent ;
- il peut comprendre en outre de la diméthyléthanolamine ; celle-ci est aussi un agent activateur employé dans les compositions de décapage, et l'agent activateur de l'invention peut, sans affecter son pouvoir, ni celui de la diméthyléthanolamine, être utilisé en présence de diméthyléthanolamine.

Un autre objet de l'invention est une composition décapante comprenant au moins un ingrédient actif de décapage et un agent activateur dudit ingrédient actif tel que défini précédemment.

L'agent activateur y est de préférence compris dans une proportion variant de 0,2 à 8% en poids par rapport au poids de la composition. A cet effet, elle comprend de 0,1 à 3% en poids d'acide citrique, et éventuellement du diacétone-alcool, de préférence en une proportion comprise entre 0,1 et 4% en poids, et/ou de la soude, de préférence en une proportion comprise entre 0,01 et 1 % en poids, le complément dudit agent activateur pouvant consister en le liquide dans lequel l'acide citrique est en solution.

L'ingrédient actif au moins est de préférence choisi parmi les esters dibasiques, les alcools, les acétates, les solvants aprotiques dipolaires et leurs mélanges. A titre de solvant aprotique dipolaire, on retiendra avantageusement un solvant choisi parmi le diméthylsulfoxyde (DMSO), la N-méthylpyrrolidone, le diméthylformamide, l'acétonitrile, la N-méthylmorpholine, la γ-butyrolactone, le diméthylacétamide et leurs mélanges. Un mélange avantageux comprend au moins un ester dibasique et un solvant aprotique dipolaire.

Une composition de l'invention peut en outre comprendre un co-solvant, par exemple choisi parmi les alcools, les esters, les dérivés phénoliques, les éthers de glycol, les solvants oxygénés, les terpènes et leurs mélanges.

Elle peut bien entendu intégrer tous autres constituants notamment choisis parmi les plastifiants, les charges telles que charges inorganiques, les dispersants, les épaississants.

Une composition de l'invention peut être appliquée au rouleau, à la brosse carrée ou au pistolet. On peut la laisser agir sur une période variant en fonction du ou des revêtements à éliminer. La composition et les débris du ou des revêtements à l'état de lambeaux peuvent être grattés à la spatule et le support ainsi décapé à nu est prêt pour un traitement.

Un autre objet de l'invention est l'utilisation d'acide citrique comme activateur dans une composition décapante. Il est mis en solution, de préférence dans un des liquides précédemment cités. Celle-ci est avantageusement destinée au domaine du bâtiment ou au décapage des carènes de bateaux.

Les exemples ci-après illustrent de manière non limitative des compositions de l'invention.

### Exemple 1 : composition décapante pour le bâtiment

Les proportions indiquées ci-après sont exprimées en pourcentage en poids par rapport au poids total de la composition :

| | |
|---|---|
| Acétate de benzyle | 38 |
| DMSO | 18 |
| Acétate de méthoxypropyle | 6 |
| DBE® | 10 |
| Glucopon® 225 | 1,5 |
| Methocel® | 1 |
| Phosphite de calcium | 19 |
| Agent activateur de l'invention | 6,5 |

Dont 4% d'une solution aqueuse de 1-25% d'acide citrique et 2,5% de DAA

Une composition de l'invention telle que décrite ci-dessus est préparée de préférence sous agitation. L'agent activateur est préparé de préférence par dissolution de l'acide citrique dans l'eau puis addition du DAA. Sa formulation est aisément réalisée par l'homme du métier compétent.

### Exemple 2 : composition décapante pour le yachting

Les proportions indiquées ci-après sont exprimées en pourcentage en poids par rapport au poids total de la composition :

| | |
|---|---|
| Acétate de benzyle | 42,5 |
| Acétate de méthoxypropyle | 10 |
| DBE® | 15 |
| Fluotan® 830 | 1 |
| Methocel® | 1 |
| Phosphite de calcium | 22,5 |
| Agent activateur de l'invention | 8 |

Dont 6% d'une solution aqueuse de 1-25% d'acide citrique et 2% de DAA.

### Exemple 3 : efficacité de l'acide citrique

La Demanderesse a comparé l'effet de différents acides carboxyliques sur le décapage sur divers subjectiles (béton, polyester...). Les acides testés sont l'acide citrique selon l'invention, l'acide lactique, l'acide formique, l'acide succinique, l'acide glycolique et l'acide acétique.

Ces acides ont été testés dans la composition suivante, dans laquelle les proportions indiquées ci-après sont exprimées en pourcentage en poids par rapport au poids total de la composition :

| | |
|---|---|
| Acétate de benzyle | 38 |
| DMSO | 18 |
| Acétate de méthoxypropyle | 8,5 |
| DBE® | 10 |
| Glucopon® 225 DK | 1,5 |
| Epaississant (Methocel)® | 1 |
| Charge (Phosphite de calcium) | 19 |
| Agent activateur | 4 |

Les activateurs suivants ont été testés :

### Première série :

L'agent n'a consisté qu'en une solution aqueuse de 15% d'un acide carboxylique
- A :: acide citrique
- Al :: acide lactique
- Af :: acide formique
- As :: acide succinique
- Ag :: acide glycolique
- Aa :: acide acétique

### Deuxième série :

L'agent a consisté en 1,5% d'une solution aqueuse de 15% d'un acide carboxylique et de 2,5% de diacétone alcool (DAA)
- AD:: acide citrique + DAA
- AlD :: acide lactique + DAA
- AfD :: acide formique + DAA
- AsD :: acide succinique + DAA
- AgD :: acide glycolique + DAA
- AaD :: acide acétique + DAA

### Troisième série :

L'agent a consisté en 1 % d'une solution aqueuse de 15% d'un acide carboxylique, de 2,5% de diacétone alcool (DAA) et de 0,5% de soude
- ADS :: acide citrique + DAA + soude
- AIDS: :acide lactique + DAA + soude
- AfDS :: acide formique + DAA + soude
- AsDS :: acide succinique + DAA + soude
- AgDS :: acide glycolique + DAA + soude
- AaDS :: acide acétique + DAA + soude

L'effet de l'agent a été mesuré dans les conditions suivantes :

Le revêtement à éliminer est un revêtement d'imperméabilité acrylique de type 13 de forte épaisseur appliqué le subjectile. Cette épaisseur a été volontairement choisie supérieure à celle normalement appliquée dans des conditions classiques de décapage, afin de mieux évaluer l'intérêt d'un activateur selon l'invention.

La composition a été appliquée à la brosse en même quantité pour chaque agent testé.

A titre de témoin, à chaque test, la composition ci-dessus a été appliquée sans agent activateur, dont la proportion a été remplacée par de l'eau.

Les résultats sont les suivants :

La composition témoin possède l'action la plus longue.

Dans les essais comparatifs des compositions comprenant un agent activateur de la première série, le résultat le plus pertinent en terme de rapidité d'action et de facilité du retrait du revêtement de son subjectile est obtenu avec la composition contenant l'agent activateur A. Les autres compositions de la première série présentent une efficacité similaire, elles sont plus efficaces que la composition témoin, mais bien moins performantes que la composition activée par A.

Il ressort des essais comparatifs des compositions comprenant un agent activateur des seconde et troisième séries que le meilleur activateur est l'acide citrique et que lorsqu'il se trouve associé à la diacétone alcool et à la soude, l'activation est optimale.

## Revendications

1. Agent activateur pour composition décapante, **caractérisé en ce qu'**il comprend au moins de l'acide citrique en solution.

2. Agent selon la revendication 1, **caractérisé en ce que** l'acide citrique est en solution dans un liquide choisi parmi l'eau, les alcools, le chloroforme et les éthers.

3. Agent selon la revendication 2, **caractérisé en ce que** l'acide citrique est en solution dans un liquide choisi parmi l'eau, le méthanol et l'éther diéthylique.

4. Agent selon l'une quelconque des revendications 1 à 3, **caractérisé en ce qu'**il comprend de 1 à 42% en poids d'acide citrique par rapport au poids de l'agent.

5. Agent selon la revendication 4, **caractérisé en ce qu'**il comprend de 1 à 25% en poids d'acide citrique par rapport au poids de l'agent.

6. Agent selon l'une quelconque des revendications 1 à 5, **caractérisé en ce qu'**il comprend en outre du diacétone-alcool.

7. Agent selon la revendication 6, **caractérisé en ce qu'**il comprend de 2 à 55% en poids de diacétone-alcool par rapport au poids de l'agent.

8. Agent selon la revendication 7, **caractérisé en ce qu'**il comprend de 12 à 36% en poids de diacétone-alcool par rapport au poids de l'agent.

9. Agent selon l'une quelconque des revendications 1 à 8, **caractérisé en ce qu'**il comprend en outre de la soude.

10. Agent selon la revendication 9, **caractérisé en ce qu'**il comprend de 0,1 à 10% de soude.

11. Composition décapante comprenant au moins un ingrédient actif de décapage et un agent activateur dudit ingrédient actif tel que défini à l'une quelconque des revendications 1 à 10.

12. Composition selon la revendication 11, **caractérisée en ce qu'**elle comprend de 0,2 à 8% en poids dudit agent activateur par rapport au poids de la composition.

13. Composition selon la revendication 11 ou 12, **caractérisée en ce qu'**elle comprend de 0,1 à 3% en poids d'acide citrique par rapport au poids de la composition.

14. Composition selon l'une quelconque des revendications 11 à 13, **caractérisée en ce qu'**elle comprend de 0,1 à 4% en poids de diacétone-alcool par rapport au poids de la composition.

15. Composition selon l'une quelconque des revendications 11 à 14, **caractérisée en ce qu'**elle comprend de 0,01 à 1 % en poids de soude par rapport au poids de la composition.

16. Composition selon l'une quelconque des revendications 11 à 15, **caractérisée en ce que** ledit ingrédient actif de décapage au moins, est choisi parmi les esters dibasiques, les alcools, les acétates, les solvants aprotiques dipolaires et leurs mélanges.

17. Composition selon la revendication 16, **caractérisée en ce que** ledit ingrédient actif de décapage au moins, est choisi parmi les esters dibasiques, les solvants aprotiques dipolaires et leurs mélanges.

18. Composition selon la revendication 17, **caractérisée en ce que** l'ingrédient actif comprend au moins un ester dibasique ou un solvant aprotique dipolaire.

19. Composition selon la revendication 18, **caractérisée en ce que** l'ingrédient actif au moins est un solvant aprotique dipolaire choisi parmi le diméthylsulfoxyde (DMSO), la N-méthylpyrrolidone, le diméthylformamide, l'acétonitrile, la N-méthylmorpholine, la γ-butyrolactone, le diméthylacétamide et leurs mélanges.

20. Composition selon l'une quelconque des revendications 11 à 19, **caractérisée en ce qu'**elle comprend un co-solvant.

21. Composition selon la revendication 20, **caractérisée en ce que** le co-solvant est choisi parmi les alcools, les esters, les dérivés phénoliques, les éthers de glycol, les solvants oxygénés, les terpènes et leurs mélanges.

22. Utilisation de l'acide citrique comme activateur dans une composition décapante.

23. Utilisation selon la revendication 22, **caractérisée en ce que** l'acide citrique est en solution.

24. Utilisation d'un agent activateur selon l'une quelconque des revendications 1 à 10, dans une composition décapante destinée au domaine du bâtiment.

25. Utilisation d'un agent activateur selon l'une quelconque des revendications 1 à 10, dans une composition pour le décapage des carènes de bateaux.
